# EUROPÄISCHE PATENTSCHRIFT

(11) **EP 1 348 307 B1**
(45) Veröffentlichungstag und Bekanntmachung des Hinweises auf die Patenterteilung: **13.07.2005**
(21) Anmeldenummer: 01990372.3
(22) Anmeldetag: 21.12.2001
(51) Int. Cl.: H04Q 3/00

(54) **SYSTEM ZUR ÜBERTRAGUNG VON SIGNALISIERUNGEN ZWISCHEN UNTERSCHIEDLICHEN NETZEN**
SYSTEM FOR TRANSMITTING SIGNALINGS BETWEEN DIFFERENT NETWORKS
SYSTEME DE TRANSMISSION DE SIGNALISATIONS ENTRE DIFFERENTS RESEAUX

(30) Priorität: 02.01.2001 DE 10100071; 11.04.2001 DE 10118193
(43) Veröffentlichungstag der Anmeldung: 01.10.2003
(73) Patentinhaber: SIEMENS AKTIENGESELLSCHAFT, 80333 München (DE)
(72) Erfinder: GRADISCHNIG, Klaus, David, Reston, VA 20194-1977 (US); RICHTER, Helmut, 85356 Freising (DE); ANGERMAYR, Manfred, 81371 München (DE); STUCKY, Volker, 80799 München (DE)
(86) Internationale Anmeldenummer: PCT/DE2001/004891
(87) Internationale Veröffentlichungsnummer: WO 2002/054785

(56) Entgegenhaltungen:
- HEIN M: "SS7-GATEWAYS" FUNKSCHAU, FRANZIS-VERLAG K.G. MUNCHEN, DE, Bd. 72, Nr. 3, 22. Januar 1999 (1999-01-22), Seiten 68-70, XP000833879 ISSN: 0016-2841
- ONG L ET AL: "Framework Architecture for Signaling Transport" IETF REQUEST FOR COMMENTS, XX, XX, Oktober 1999 (1999-10), Seiten 1-21, XP002169054
- ANQUETIL L-P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION, ALCATEL. BRUSSELS, BE, 1. April 1999 (1999-04-01), Seiten 151-157, XP000830045 ISSN: 0013-4252

## Beschreibung

Die Erfindung betrifft ein System zur Übertragung von Signalisierungen zwischen unterschiedlichen Netzen.

Bekanntermaßen ermöglicht ein Signalisierungs-Gateway einen Übergang einer CCS7(Common Channel Signaling System 7)-Signalisierung von einem CCS7-Netz mit CCS7-Verbindungen in ein anderes Netz, insbesondere in ein IP-Netz. Für diesen Übergang ist ein M3UA(MTP Level 3 User Adaptation)-Protokoll vorgesehen.

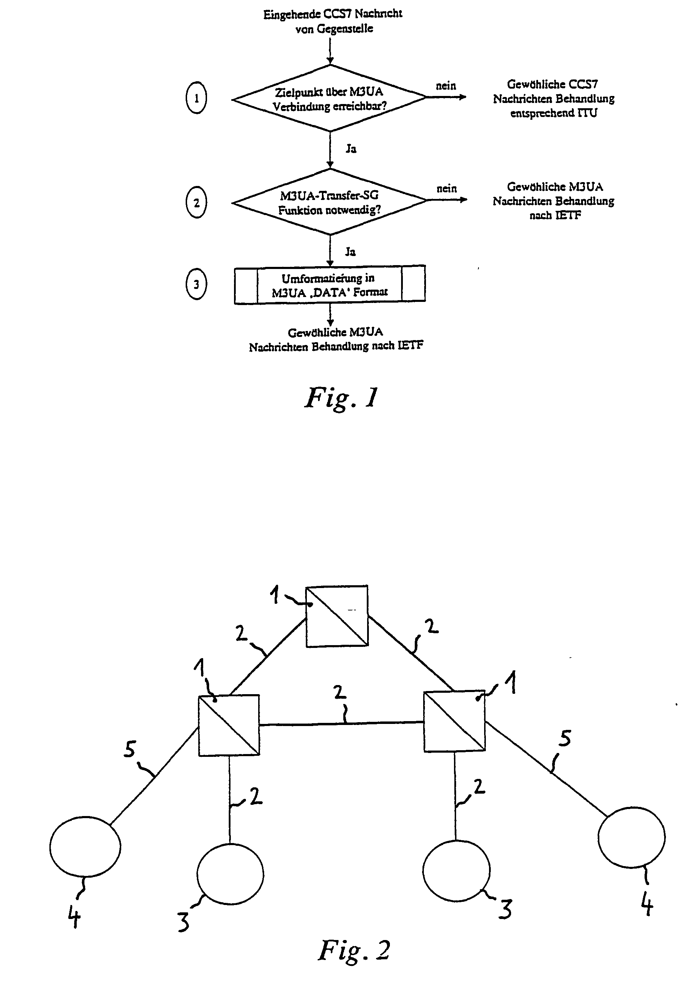

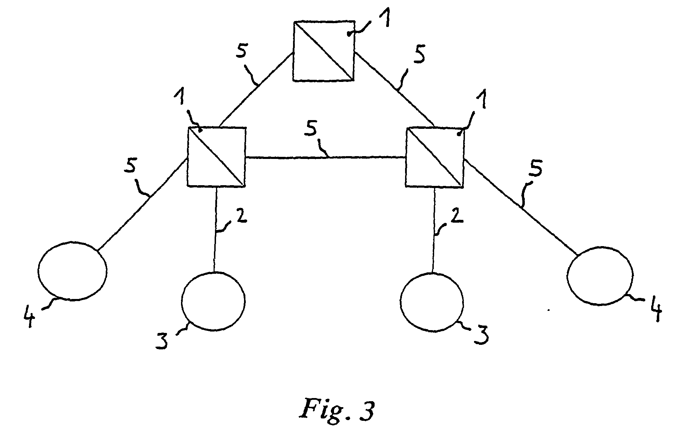

Ein Ausführungsbeispiel einer bisherigen Netzverbindung ist in Figur 3 dargestellt. In dieser Konfiguration sind die Signalisierungs-Gateways 1 - im Gegensatz zu der Ausführung in Figur 2 - mittels CCS7-Verbindungen 5 miteinander verbunden. Diese Verbindungen basieren auf CCS7 spezifischer Hardware und hinsichtlich eines Sicherungsprotokolls auf CCS7 spezifischer Softwarelösung. Eine CCS7-Signalisierungs-Nachricht eines MTP-Signalisierungs-Endpunktes 4 zu einem weiteren MTP-Signalisierungs-Endpunkt 4 oder zu einem M3UA-Signalisierungs-Endpunkt 3 über eines der Signalisierungs-Gateways 1 wird nur über eine CCS7-Verbindung 5 ermöglicht.

Die heute verfügbaren Netz-Systeme verwenden bisher CCS7-Links für eine CCS7-Verbindung zwischen zwei Signalisierungs-Gateways. Ein Nachteil dieser Signalisierung ist, daß eine Internet-Verbindung unter Verwendung eines M3UA-Protokolls nicht möglich ist, da von diesem nur eine Punkt-zu-Punkt-Verbindung - typischerweise vom Signalisierungs-Gateway zum Mediagateway-Controller - abgedeckt wird. Da die Signalisierungs-Gateways in dieser Konfiguration aber nur als Signalisierungs-Transferpunkte agieren, ist eine Verbindung über ein Internet-Protokoll (IP) unter Verwendung des M3UA-Protokolls nicht möglich.

Um eine Verbindung zwischen mindestens zwei Signalisierungs-Gateways zu ermöglichen, ist es bekannt CCS7-Links vorzusehen. Ferner ist bekannt, eine M2UA Verbindung einzusetzen. Deren Spezifizierung ist jedoch noch nicht so weit fortgeschritten, so daß ein Einsatz in absehbarer Zeit nicht möglich ist. (Eine Einschränkung im Umfang gibt es nicht.)

Aus der Druckschrift "Hein, M: 'SS7-Gateways', Funkschau, Franzis-Verlag K.G. München, DE Bd. 72, Nr. 3, 22. Januar 1999 (1999-01-22), Seiten 68 - 70, XP000833879 ISSN: 0016-2841" ist ein System zum Übertragen von Signalisierungen zwischen zwei unterschiedlichen Netzen bekannt. Wie allerdings mindestens zwei Signalisierungs-Gateways auf einfache Weise miteinander verbunden werden konnen, kann dieser Druckschrift nicht entnommen werden.

Aus der Druckschrift "Ong, L et al: 'Framework Architecture for Signaling Transport' IETF Request for Comments, XX, XX, Oktober 1999 (1999-10), Seiten 1 - 21, XP002169054" ist ebenfalls ein System zur Übertragung von Signalisierungen zwischen unterschiedlichen Netzen bekannt. Wie allerdings mindestens zwei Signalisierungs-Gateways auf einfache Weise miteinander verbunden werden konnen, kann auch dieser Druckschrift nicht entnommen werden.

Schließlich ist der Druckschrift "Anquetil, L.-P. et al: 'Media gateway control protocol and voice over IP gateways. MGCP and VOIP gateways will offer seamless interworking of new VOIP networks with today's telephone networks' electrical communication AlCATEL. Brüssel, BE 1. April 1999 (1999-04-01), Seiten 151 - 157, XP000830045 ISSN: 0013-4252" ebenfalls ein System zur Übertragung von Signalisierungen zwischen unterschiedlichen Netzen bekannt. Auch dieser Druckschrift kann nicht entnommen werden, wie mindestens zwei Signalisierungs-Gateways auf einfache Weise miteinander zu verbinden sind.

Der Erfindung liegt die Aufgabe zugrunde, ein System anzugeben, welches eine Verbindung mindestens zweier Signalisierungs-Gateways unter Verwendung standardisierter Protokolle ermöglicht.

Diese Aufgabe wird durch ein Verfahren nach Patentanspruch 1 gelöst. Demgemäß wird die Aufgabe durch ein System bzw. Verfahren gelöst, bei dem mindestens zwei Signalisierungsgateways unter Verwendung eines Punkt-zu-Punkt-Protokolls zur symmetrischen und quasi-assoziierten Signalisierung miteinander verbunden werden, dessen Routing-Information in eine Routing-Datenbasis eines CCS7 Message-Transfer-Parts integriert wird.

Ein wesentlicher Punkt der Erfindung liegt darin, daß eine M3UA-Routinginformation in eine Routingdatenbasis eines CCS7-Messagetransferparts integriert wird. Das Prinzip der MTP-Routingdatenbasis ist, daß alle direkten Links (Punkt-zu-Punkt-Verbindungen) zu einem Nachbarknoten zu einem Linkset zusammengefaßt werden. Bei einer Routenbeschreibung zu einem Ziel wird immer auf diese Linksets verwiesen. Ein Ziel muß jedoch nicht immer direkt hinter einem referenzierten Linkset liegen, sondern kann für quasi-assoziierte Signalisierungen auch auf einen Linkset zu einem Signalisierungs-Transferpunkt verweisen. Daher ist keine Information uber den kompletten Weg von Nöten, sondern nur die Information über das abgehende Linkset.

Nach diesem Prinzip wird nun eine M3UA-Verbindung über IP integriert. Dabei wird eine M3UA-Verbindung zu einem Nachbarknoten einfach als Linkset betrachtet. Bei einer Routenbeschreibung zu einem Ziel wird dann nicht nur ein CCS7-Linkset zur Spezifizierung eines abgehenden Weges verwendet, sondern auch ein IP-Linkset. Ein Linkset ist dann - ganz allgemein definiert - als eine direkte Verbindung zwischen zwei Nachbarknoten zu verstehen.

Für die Routenbeschreibung - also für die Beschreibung, über welche(n) Knoten das gewünschte Ziel erreicht wird - ist es dabei aus Sicht der Erfinder völlig belanglos, ob ein Linkset mit CCS7-Links als Transportmedium benutzt wird, oder aber eine M3UA-Verbindung über das Internet-Protokoll (IP). Auf diese Weise ist es daher möglich, zwischen mindestens zwei Signalisierungsgateways ein IP-Linkset einzurichten und durch die allgemeine Routenbeschreibung diese Signalisierungs-Gateways als Signalisierungs-Transferpunkte zu benutzen.

Da es sich beim M3UA-Protokoll um eine Client-Server-Architektur handelt, ist es notwendig, daß für die zwei (eigentlich gleichberechtigten) verbundenen Signalisierungs-Gateways festgelegt wird, welches Signalisierungs-Gateway als Client und welches als Server agiert. Dies kann z. B. durch ein Attribut des IP-Linksets geschehen. Das IP-Linkset wird dabei als aktiv betrachtet, sobald die M3UA-Verbindung zustandegekommen ist.

In der Regel empfängt ein Signalisierungs-Gateway M3UA-Nachrichten über eine M3UA-Verbindung, die für einen fernen Zielpunkt im CCS7-Netz bestimmt sind. Für den Fall, daß die Nachrichten nicht für den Signalisierungs-Gateway bestimmt sind, werden sie einer Routingfunktion übergeben, und daraufhin entsprechend ihrem Zielpunkt weitergeleitet. Die Nachrichten werden dabei vom M3UA-Nachrichtenformat auf ein CCS7-MTP-Nachrichtenformat konvertiert. Diese Funktion wird unabhängig davon ausgeführt, ob das Signalisierungs-Gateway für den involvierten IP-Linkset als M3UA-Client oder als M3UA-Server konfiguriert ist.

In einer weiteren Ausführung der Erfindung empfängt ein Signalisierungs-Gateway eine CCS7-MTP-Nachricht aus dem CCS7-Netz, und leitet diese zu einem M3UA-Zielpunkt, der als CCS7-Signalisierungs-Endpunkt arbeitet, weiter. Die Nachricht wird dabei von dem CCS7-MTP-Nachrichtenformat auf das M3UA-Nachrichtenformat konvertiert. Durch die transparente Integration der M3UA-Verbindung in den MTP können nun auch solche Nachrichten in das IP-Netz weitergeleitet werden, die für andere Ziele als den anderen Endpunkt der M3UA-Verbindung bestimmt sind. Diese Funktion wird dabei unabhängig davon ausgeführt, ob der Signalisierungs-Gateway für den involvierten IP-Linkset als Client, oder als Server konfiguriert ist.

Durch die vorliegende Erfindung können also CCS7-Nachrichten aus dem CCS7-Netz über ein IP-Netz wieder zurück in ein CCS7-Netz geroutet werden, wobei ein Signalisierungs-Gateway an der Grenze zwischen einem IP und einem CCS7-Netz die notwendige Konvertierung der Nachrichten übernimmt.

Damit nun die kompletten CCS7-Netzanforderungen - insbesondere die des MTP-Netzmanagements - erfüllt werden können, muß das M3UA-Protokoll eines solchen "M3UA-Transfer-Signalisierungs-Gateways" ein bestimmtes Verhalten aufweisen. Es muß - auch wenn es sich eigentlich auf M3UA-Serverseite befindet - ein M3UA-Client-verhalten aufweisen. Desweiteren müssen bestimmte Nachrichtenformate speziell behandelt werden. Die spezielle Behandlung der Nachrichtenformate kann durch eine Bewertung jeder Nachricht unter Zuhilfenahme der jeweiligen integrierten MTP/M3UA-Routingdatenbasis erreicht werden.

Vorteile und Zweckmäßigkeiten der Erfindung ergeben sich im übrigen aus den Unteransprüchen sowie der nachfolgenden Beschreibung bevorzugter Ausführungsbeispiele, die anhand der Abbildungen näher erläutert werden. Hierbei zeigen:
Fig. 3 eine bisherige Netzverbindung mit Signalisierungs-Gateways, die mittels CCS7-Verbindungen miteinander verbunden sind;
Fig. 1 ein Ablaufdiagramm einer Nachrichten-Signalisierung eines M3UA-Protokolls in einem Signalisierungs-Gateway; und
Fig. 2 eine Netzverbindung mit Signalisierungs-Gateways, die mittels M3UA-Verbindungen miteinander verbunden sind.

In der nachfolgenden Beschreibung werden für gleiche und gleich wirkende Teile dieselben Bezugsziffern verwendet.

In Figur 1 ist ein gemäß der Erfindung angepaßtes Ablaufdiagramm einer Nachrichten-Signalisierung eines M3UA-Protokolls in einem Signalisierungs-Gateway 1 dargestellt. Die Fallunterscheidung 1 entspricht einer bisherigen Funktionalität eines Signalisierungs-Gateways 1.

Die Fallunterscheidung 2 wird mit "ja" bewertet, wenn eine CCS7-Nachricht empfangen wird, deren Zielpunkt über eine abgehende M3UA-Verbindung 2 erreicht wird, die nicht direkt zu einer Endpunkt-Verbindung führt. (In einer weiteren Ausführung der Erfindung werden diese Routen bereits mit einem M3UA-Transfer-Signalisierungs-Gateway Kennzeichen eingerichtet.) Die Fallunterscheidung 2 wird mit "nein" bewertet, wenn das Ziel direkt hinter der M3UA-Verbindung 2 liegt.

Werden CCS7-Nachrichten von der Fallunterscheidung 2 mit "ja" berwertet, werden sie nicht in das entsprechende spezifische M3UA-Format umgewandelt, sondern in das M3UA-Format "Data", und über eine M3UA-Verbindung 2 zu einem Signalisierungs-Gateway 1 transferiert. Dieser Schritt ist notwendig, da im M3UA-Format mit Ausnahme des "Data"-Formats weder Quelle noch Ziel der Nachricht enthalten sind und solche Nachrichten daher nur über eine Route gesendet werden dürfen, die direkt zum Zielpunkt der entsprechenden M3UA-Nachricht führt.

Wird die Fallunterscheidung 2 mit "nein" bewertet, werden spezifische CCS7-Nachrichten in das M3UA-Format umgewandelt. CCS7-Nachrichten, die von einem anderen Knoten kommen und an ein direkt benachbartes Signalisierungs-Gateway 1 gerichtet sind, werden in einem M3UA-Format "Data" transportiert, damit der Bezug zur Nachrichtenquelle nicht verloren geht. Der M3UA eines Signalisierungs-Gateways 1 leitet eine empfangene Nachricht anhand der ausgewerteten Informationen an ein "MTP-L3-Netz-Management" weiter. Für den Fall, daß der Zielpunkt ein MGC (Media Gateway Controller) ist, werden alle CCS7-Netz-Management Nachrichten außer TFC(Transfer Controlled)-Messages und UPU(User Part Unavailable)-Messages verworfen. In einer weiteren Ausgestaltung der Erfindung werden diese Nachrichten auch im "Data"-Format transportiert, wenn das MGC dieses Format für MTP-Netz-Managementnachrichten unterstützt. Generiert ein Signalisierungs-Gateway 1 selbst Netz-Management Nachrichten zu einem weiteren Signalisierungs-Gateway 1, so werden sie im M3UA-Format übermittelt. Daher werden nur als Datennachricht deklarierte CCS7-Nachrichten versendet.

In Figur 2 ist ein Ausführungsbeispiel einer Netzverbindung gemäß der Erfindung dargestellt. Die Signalisierungs-Gateways 1 werden mittels M3UA-Verbindungen 2 miteinander verbunden. In dieser Ausführung sind die Signalisierungs-Gateways 1 durch eine Maschenverbindung miteinander verbunden. In einer weiteren Ausführung sind auch Netzverbindungen mittels einer Sternverbindung oder einer Ringverbindung möglich.Vorzugsweise nutzt die M3UA-Verbindung 2 ein Internet-Protokoll (IP) zur Adressierung der Nachrichtenpakete über das Internet.

Wird eine CCS7-Signalisierungs-Nachricht von einem MTP-Signalisierungs-Endpunkt 4 zu einem weiteren MTP-Signalisierungs-Endpunkt 4 oder zu einem M3UA-Signalisierungs-Endpunkt 3 gesendet, so kann diese im Netz zwischen den Signalisierungs-Gateways 1 ohne Nutzung von spezifischen CCS7-Verbindungen 5 transportiert werden. Auch CCS7-Zweitwege können als M3UA-Verbindungen 2 eingerichtet werden. Die Zweiwegewahl erfolgt in Einklang mit CCS7-MTP spezifischen Netzprotokollen.

## Patentansprüche

1. System zur Übertragung von Signalisierungen zwischen unterschiedlichen Netzen,
**dadurch gekennzeichnet,**
**dass** mindestens zwei Signalisierungs-Gateways (1) unter Verwendung eines Message-Transfer-Part-Level 3 User Adaptation Protokolls, abgekürzt M3UA-Protokolls zur symmetrischen und quasi-assoziierten Signalisierung miteinander verbunden werden, dessen M3UA-Routing-Information in eine Routing-Datenbasis eines Common Channel System 7, abgeküzt CCS7 Message-Transfer-Parts integriert wird.

2. System nach Anspruch 1,
**dadurch gekennzeichnet,**
**dass** als Netzverbindung ein Internet-Protokoll Netz, abgekürzt IP-Netz verwendet wird.

3. System nach Anspruch 1,
**dadurch gekennzeichnet,**
**dass** zwischen den Signalisierungs-Gateways (1) ein IP-Linkset eingerichtet wird und durch eine allgemeine Routenbeschreibung die Signalisierungs-Gateways als Signalisierungs-Transferpunkte, abgekürzt STP, benutzt werden.

4. System nach einem der vorhergehenden Ansprüche,
**dadurch gekennzeichnet,**
**dass** ein Client-Server-Attribut der verbundenen Signalisierungs-Gateways (1), über ein Attribut des IP-Linksets festgelegt ist.

5. System nach einem der Ansprüche 3 oder 4,
**dadurch gekennzeichnet,**
**dass** Nachrichten über ein IP-Linkset in ein IP-Netz weitergeleitet werden, die für andere Ziele als einen anderen Endpunkt der M3UA-Verbindung (2) bestimmt sind.

6. System nach Anspruch 5,
**dadurch gekennzeichnet,**
**dass** eine Routenbeschreibung zu einem Ziel eine M3UA-Verbindung (2) verwendet.

7. System nach einem der vorhergehenden Ansprüche,
**dadurch gekennzeichnet,**
**dass** zur Netzübertragung ein CCS7-Network-Management unterstützt wird.

8. System nach einem der vorhergehenden Ansprüche, insbesondere nach Anspruch 8,
**dadurch gekennzeichnet,**
**dass** mindestens zwei Signalisierungs-Gateways (1) als CCS7-Signalisierungs-Gateways eingesetzt werden, die über ein IP-Netz miteinander verbunden sind.

9. System nach einem der vorhergehenden Ansprüche,
**dadurch gekennzeichnet,**
**dass** CCS7-Nachrichten aus einem CCS7-Netz mit CCS7-Verbindungen (5) über ein IP-Netz wieder zurück in ein weiteres CCS7-Netz mit CCS7-Verbindungen (5) geroutet werden, wobei das Signalisierungs-Gateway (1) die notwendige Konvertierung der Nachrichten übernimmt.

10. System nach einem der vorhergehenden Ansprüche,
**dadurch gekennzeichnet,**
**dass** eine empfangene CCS7-Nachricht, deren Zielpunkt über eine abgehende M3UA-Verbindung (2) erreicht wird, die nicht direkt zu einem Verbindungs-Ziel führt, in ein M3UA-Format umgewandelt wird.

11. System nach einem der vorhergehenden Ansprüche,
**dadurch gekennzeichnet,**
**dass** eine empfangene CCS7-Nachricht, deren Zielpunkt nicht über eine abgehende M3UA-Verbindung (2) erreicht wird, die nicht direkt zu einem Verbindungs-Endpunkt führt, in ein M3UA-Format "Data" umgewandelt und über M3UA zu einem Signalisierungs-Gateway transferiert wird.

12. Signalisierungs-Gateway zur Realisierung des Systems nach einem der vorangehenden Ansprüche,
**gekennzeichnet durch**,
ein Konvertierungssystem, welches an einem Übergang von einem IP-Netz zu einem CCS7-Netz eine Konvertierung der Nachrichten übernimmt.

## Claims

1. System for transmitting signalling between different networks,
**characterized in that** at least two signalling gateways (1) are interlinked using a message transfer part level 3 user adaptation protocol, in short, a M3UA protocol for symmetric and quasi-associated signalling, the M3UA routing information of which being integrated into a routing database in a common channel system 7, in short, CCS7 message transfer parts.

2. System according to Claim 1,
**characterized in that** an internet protocol network, in short, an IP network is used as the network connection.

3. System according to Claims 1,
**characterized in that** an IP linkset is set up between the signalling gateways (1) and the signalling gateways are used as signalling transfer points, in short, (STP) by means of a general route description.

4. System according to one of the preceding claims,
**characterized in that** a client-server attribute of the connected signalling gateways (1) is established via an attribute of the IP linkset.

5. System according to one of Claims 3 or 4,
**characterized in that** messages which are intended for destinations other than a different end point of the M3UA connection (2) are forwarded via an IP linkset into an IP network.

6. System according to Claim 5,
**characterized in that** a route description to a destination uses an M3UA connection (2).

7. System according to one of the preceding claims,
**characterized in that** CCS7 network management is supported for network transfers.

8. System according to one of the preceding claims, in particular according to Claim 8,
**characterized in that** at least two signalling gateways (1) are used as CCS7 signalling gateways, which are interlinked via an IP network.

9. System according to one of the preceding claims,
**characterized in that** CCS7 messages from a CCS7 network with CCS7 connections (5) are routed back again via an IP network into a further CCS7 network with CCS7 connections (5), with the signalling gateway (1) executing the necessary conversion of the messages.

10. System according to one of the preceding claims,
**characterized in that** a received CCS7 message, the destination point of which is reached via an outgoing M3UA connection (2), which does not lead directly to a connection destination, is converted to an M3UA format.

11. System according to one of the preceding claims,
**characterized in that** a received CCS7 message, the destination point of which is not reached via an outgoing M3UA connection (2), which does not lead directly to a connection end point, is converted to an M3UA "data" format and transferred via M3UA to a signalling gateway.

12. Signalling gateway for implementing the system according to one of the preceding claims,
**characterized by** a conversion system that executes the conversion of messages at an interface between an IP network and a CCS7 network.

## Revendications

1. Système de transmission de signalisations entre réseaux différents,
**caractérisé**
**en ce qu'**au moins deux passerelles de signalisation (1) sont interconnectées moyennant l'utilisation d'un protocole Message Transfer-Part-Level 3 User Adaptation, en abrégé: M3UA pour la signalisation symétrique et quasi associée, dont l'information de routage M3UA est intégrée dans une base de données de routage d'un Message Transfer Part Common Channel System 7, en abrégé: CCS7.

2. Système selon la revendication 1,
**caractérisé**
**en ce qu'**un réseau Internet Protocol, en abrégé: IP est utilisé en tant que connexion de réseau.

3. Système selon la revendication 1,
**caractérisé**
**en ce qu'**un groupe de liens (linkset) IP est aménagé entre les passerelles de signalisation (1) et moyennant une description générale de route les passerelles de signalisation sont utilisées en tant que points de transfert de signalisation, en abrégé: STP.

4. Système selon l'une des revendications précédentes,
**caractérisé**
**en ce qu'**est déterminé, par l'intermédiaire d'un attribut du groupe de liens (linkset) IP, un attribut client-serveur des passerelles de signalisation (1) connectées.

5. Système selon l'une des revendications 3 ou 4,
**caractérisé**
**en ce que** sont réacheminés vers un réseau IP, par l'intermédiaire d'un groupe de liens (linkset) IP, des messages qui sont destinés à des destinations autres qu'un autre point terminal de la connexion M3UA (2).

6. Système selon la revendication 5,
**caractérisé**
**en ce qu'**une description de route vers une destination utilise une connexion M3UA (2).

7. Système selon l'une des revendications précédentes,
**caractérisé**
**en ce qu'**une gestion de réseau (Network Management) CCS7 est assistée pour la transmission réseau.

8. Système selon l'une des revendications précédentes, en particulier selon la revendication 8,
**caractérisé**
**en ce que** sont mises en oeuvre, en tant que passerelles de signalisation CCS7, au moins deux passerelles de signalisation (1) qui sont interconnectées par l'intermédiaire d'un réseau IP.

9. Système selon l'une des revendications précédentes,
**caractérisé**
**en ce que** des messages CCS7 sont routés à partir d'un réseau CCS7 avec des connexions CCS7 (5) via un réseau IP pour les ramener dans un autre réseau CCS7 avec des connexions CCS7 (5), la passerelle de signalisation (1) prenant en charge la conversion nécessaire des messages.

10. Système selon l'une des revendications précédentes,
**caractérisé**
**en ce qu'**un message CCS7 reçu, dont on atteint le point de destination par l'intermédiaire d'une connexion M3UA (2) de départ qui ne conduit pas directement à une destination de connexion, est converti dans un format M3UA.

11. Système selon l'une des revendications précédentes,
**caractérisé**
**en ce qu'**un message CCS7 reçu, dont on n'atteint pas le point de destination par l'intermédiaire d'une connexion M3UA (2) de départ qui ne conduit pas directement à un point terminal de connexion, est converti dans un format «data» M3UA et est transféré via M3UA vers une passerelle de signalisation.

12. Passerelle de signalisation permettant de réaliser le système selon l'une des revendications précédentes,
**caractérisé par**
un système de conversion qui prend en charge une conversion des messages au niveau d'un passage d'un réseau IP vers un réseau CCS7.
